# FASCICULE DE BREVET EUROPEEN

(11) **EP 2 877 738 B1**
(45) Date de publication et mention de la délivrance du brevet: **07.09.2016**
(21) Numéro de dépôt: 13762271.8
(22) Date de dépôt: 05.07.2013
(51) Int. Cl.: F03D 3/06, F03D 7/04, F03D 7/02, F03D 3/00

(54) **MACHINE TOURNANTE A ROTOR FLUIDIQUE A PALES ORIENTABLES**
DREHMASCHINE MIT EINEM ROTOR IN EINER FLÜSSIGKEIT MIT AUSRICHTBAREN SCHAUFELN
ROTARY MACHINE COMPRISING A ROTOR PLACED IN A FLUID AND EQUIPPED WITH ORIENTABLE BLADES

(30) Priorité: 05.07.2012 FR 1201899
(43) Date de publication de la demande: 03.06.2015
(73) Titulaire: ADV Tech, 33700 Merignac (FR)
(72) Inventeur: CURUTCHET, Arnaud, F-33700 Merignac (FR); GROSMANGIN, Stéphane, F-33510 Andernos Les Bains (FR); FOURTON, Renaud, F-33138 Taussat (FR); CORDE, Gabriel, F-33950 Lege Cap Ferret (FR)
(74) Mandataire: Le Forestier, Eric
(86) Numéro de dépôt international: PCT/IB2013/055525
(87) Numéro de publication internationale: WO 2014/006603

(56) Documents cités:
- WO-A1-92/07189
- US-A1- 2008 258 469
- US-A1- 2011 110 779
- US-B1- 6 320 273

## Description

### Domaine technique

L'invention concerne les générateurs et les propulseurs travaillant dans un flux de fluide transversal, et plus particulièrement un nouveau mécanisme permettant de réaliser l'asservissement de l'inclinaison d'une pale montée sur un rotor en fonction de la rotation de ce dernier.

### Art antérieur

Selon l'art antérieur, on connaît le rotor de Lipp, et plus particulièrement le mécanisme permettant d'orienter les pales d'un rotor placé dans un flux transversal de fluide (voir WO9207189A1). Les axes de pivotement des pales sont parallèles à l'arbre du rotor, sur la périphérie duquel elles sont disposées. Chacune d'elle est solidaire d'un pignon denté, constamment en prise avec son pignon intermédiaire, lui-même en prise permanente avec le pignon central, fixe dans l'absolu, mais décentré par rapport à l'arbre ; le pignon restant libre par ailleurs.

Ce rotor est donc constitué de pales dont l'incidence est asservie en fonction de la rotation du rotor. Le système mécanique est basé sur des cascades de pignons complexes, avec des pignons satellites. L'asservissement de la position angulaire des pales est réalisé en faisant varier la position du pignon central en fonction de la position angulaire du rotor. A chaque cycle, il faut en permanence modifier la position de ce pignon central, qui coulisse dans une glissière, de manière à orienter les pales autour d'un angle moyen maintenu constant par rapport au flux de fluide, grâce à la cascade de pignons. Cette solution technique est compliquée, lourde, gourmande en énergie, et certainement pas adaptée pour être utilisée dans la conception par exemple d'une éolienne.

On connaît également par Le document US 2011/110779 A1 une machine à rotor fluidique dans laquelle la commande de l'orientation des pales est réalisée par des tringles montées dans les bras de pales et mues par un mécanisme came à suiveurs multiples au niveau de l'axe du rotor.

Le document US 6 320 273 B1 enseigne quant à lui une machine dans laquelle la commande d'inclinaison des pales est effectuée par des câbles reliés à un pivot excentré prévu au voisinage de l'axe de rotation. Ce mécanisme n'opère qu'en traction et les possibilités de commande sont donc extrêmement limitées, même si une variation de l'angle d'incidence maximal est théoriquement possible.

### Résumé de l'invention

La présente invention vise à proposer une nouvelle solution mécanique permettant d'assurer l'asservissement angulaire de pales en fonction de la rotation du rotor sur lequel elles sont montées. Les axes de pivotement des pales sont parallèles à l'arbre du rotor, sur la périphérie duquel elles sont disposées. Ce nouveau mécanisme est simple, offre un bon rendement, laisse plusieurs facteurs de liberté notamment pour gérer l'inclinaison maximale des pales, et est adaptable à des rotors de grands diamètres. Il est particulièrement adapté pour la réalisation d'éoliennes, déclinables en version horizontale ou verticale.

Un autre objet de l'invention est une nouvelle solution mécanique qui permette également de passer d'un mode de fonctionnement à un autre, par exemple d'un mode de type rotor de Lipp à un mode de type machine de Voith.

On propose à cet effet une machine tournante à rotor fluidique telle que définie dans la revendication 1.

Certains aspects préférés mais non limitatifs de cette machine peuvent comprendre les caractéristiques additionnelles qui figurent dans les revendications dépendantes, prises isolément ou en toutes combinaisons techniquement compatibles pour l'homme du métier.

L'invention présente de nombreux avantages.

Elle peut fonctionner dans des flux de fluides violents car il est possible de commander en permanence les incidences limites des pales. En version générateur, lorsque le flux du fluide augmente, ou en version propulseur, lorsque la vitesse de rotation du rotor augmente, il est possible de réduire automatiquement les angles d'incidence des pales, et donc de préserver le mécanisme du rotor, tout en continuant à produire de l'énergie dans le cas d'une utilisation en générateur. Contrôler les incidences limites des pales permet également d'augmenter le rendement sur une plus large gamme de force du flux, en mode générateur comme en mode propulseur. Ces valeurs de débattement peuvent être contrôlées selon un mode de réalisation en jouant sur la position du point d'ancrage de la bielle sur le vilebrequin. En rapprochant le point d'accroche de la bielle de l'axe central du vilebrequin, on réduit la course de la bielle, et donc l'amplitude du mouvement du palonnier, et donc finalement les angles limites de la pale.

L'invention génère peu de bruit en fonctionnement.

Déclinée en éolienne, elle ne présente pas le problème de vitesse élevée en bout de pale comme dans le cas des éoliennes classiques à hélice. En outre, elle présente l'avantage, sur le plan écologique, d'être plus visible pour les oiseaux qu'une éolienne à hélice.

L'invention permet de réaliser des rotors de petites tailles, pour faire par exemple des micro-pompes, comme des rotors de très grandes tailles, pour réaliser de grandes éoliennes.

Selon un mode de réalisation, le rotor est particulièrement solide, car chaque pale est attachée à la structure par ses deux extrémités.

Différents essais de diamètre de rotor et de largeur et de profil des pales pourront être menés pour déterminer les meilleurs compromis en fonction de la nature du flux, de sa force moyenne et en pointe, et du type d'utilisation de l'invention, à savoir en générateur ou en propulseur. Des simulations hydrodynamiques et aérodynamiques pourront également permettre de valider ces choix.

L'invention permet de réaliser des versions de générateur ou de propulseur à axe horizontal ou à axe vertical.

Selon un mode de réalisation, le diamètre du rotor peut être rendu réglable afin d'augmenter l'adaptabilité de la machine en fonction de la force du flux.

Selon un autre mode de réalisation, plusieurs pales, de profils et de dimensions identiques ou non, peuvent être montées sur un même bras. L'espace entre les pales devant être suffisant pour permettre une rotation de ses dernières autour de leur propre axe de rotation.

### Brève description des dessins

D'autres caractéristiques, buts et avantages de l'invention ressortiront de la description qui suit, qui est purement illustrative et non limitative, et qui doit être lue en regard des dessins annexés sur lesquels :
- la figure 1 présente une vue de profil de l'invention pourvue d'une seule pale (4) illustrée pour quatre positions du rotor,
- la figure 2 présente une vue détaillée de la première partie du mécanisme permettant de contrôler l'incidence de la pale en fonction de la position angulaire du rotor,
- la figure 3 présente une vue détaillée de la deuxième partie du mécanisme permettant de contrôler l'incidence de la pale en fonction de la position angulaire du rotor,
- les figures 4A à 4D présentent le cycle de fonctionnement du mécanisme décrit aux figures 2 et 3 permettant de contrôler l'inclinaison de la pale,
- la figure 5 est une coupe de l'ensemble du mécanisme permettant de contrôler l'inclinaison de la pale en fonction de la position angulaire du rotor,
- les figures 6A à 6C présentent selon un mode de réalisation une solution pour diminuer l'inclinaison maximale de la pale,
- la figure 7 présente une autre variante mécanique permettant de diminuer l'inclinaison maximale de la pale,
- les figures 8A à 8C présentent d'autres solutions techniques pour réaliser le contrôle angulaire de la nacelle, soit avec une cascade de plusieurs pignons, soit avec des renvois d'angles, soit avec une chaine et deux pignons,
- la figure 9 présente une variante de l'invention, ou la position angulaire du pignon (9) est rendue variable par le biais d'un actionneur, ce qui permet de contrôler la direction du bord d'attaque de la pale par rapport à la direction du flux ou d'orienter le flux,
- la figure 10 illustre comparativement une cinématique de type Voith-Schneider et une cinématique de type Lipp,
- la figure 11 illustre en élévation et partiellement en coupe une version du mécanisme décrit plus haut adaptée pour un fonctionnement en cinématique de type Voith-Schneider,
- la figure 12 illustre le fonctionnement selon la cinématique de type Voith-Schneider pour quatre angles du rotor,
- la figure 13A illustre une autre mode de réalisation de l'invention, avec pales en porte-à-faux, adapté pour un fonctionnement en cinématique de type Lipp,
- la figure 13B illustre un mode de réalisation basé sur celui de la figure 13A, toujours avec pales en porte-à-faux, adapté pour un fonctionnement en cinématique de type Voith-Schneider, et
- les figures 14A et 14B illustrent un exemple possible d'un mécanisme de commutation de mode, notamment pour passer d'un fonctionnement en cinématique de type Lipp à un fonctionnement en cinématique de type Voith-Schneider.

### Description détaillée de formes de réalisation préférées

On va maintenant décrire une machine à entraînement fluidique équipée d'un mécanisme synchronisé sur la rotation d'un rotor placé dans un flux transversal de fluide, le mécanisme permettant de commander l'incidence d'au moins une pale montée en périphérie de ce rotor.

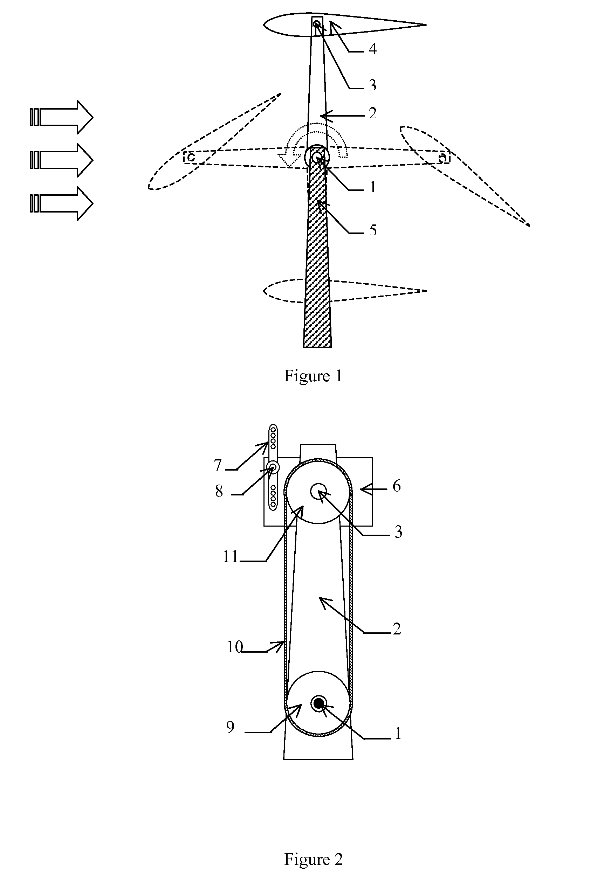

La figure 1 présente une vue générale de profil d'un rotor à cinématique de type Lipp à une pale, permettant d'illustrer le mouvement de la pale en fonction de la position angulaire du rotor. Le rotor est en rotation autour d'un axe 1, maintenu par une structure porteuse 5. La pale 4, située à l'extrémité d'un bras 2, peut pivoter autour de l'axe 3 parallèle à l'axe 1 selon un certain cycle et dans une gamme d'angles comprise entre - 90° et +90° par rapport à la direction du flux, grâce à un mécanisme synchrone que l'on va maintenant décrire.

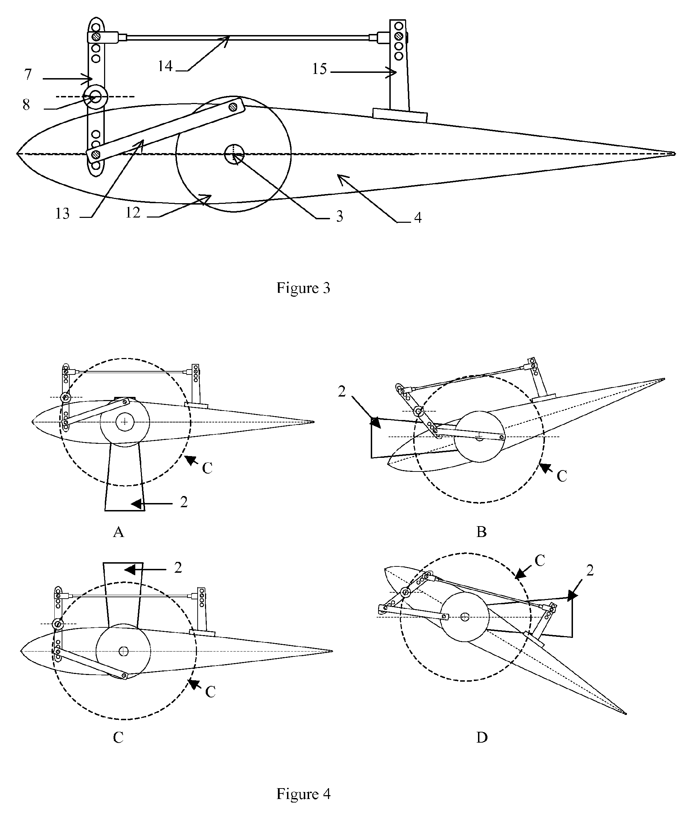

La première partie du mécanisme synchrone est détaillée à la figure 2. Ce mécanisme comprend un élément d'excentrement 6, ici nommé nacelle, sur lequel est fixé un axe 8 autour duquel pivote un élément de renvoi 7 ou palonnier. La nacelle 6 est solidaire d'une poulie 3, elle-même reliée à une poulie fixe 9, via une courroie (ou une chaîne) 10 , de sorte que lorsque le rotor tourne autour de son axe de rotation 1, la nacelle 6 reste orientée toujours dans la même direction. Selon un mode de réalisation, le rapport de démultiplication des deux poulies est égal à 1. L'élément nacelle peut être conçu selon différentes formes. Le choix de la position de l'axe 8 sur la nacelle 6 est déterminé principalement en fonction de la taille de la machine et en fonction de la conception de la deuxième partie du mécanisme, décrit maintenant en référence à la figure 3.

La figure 3 présente une vue détaillée de cette deuxième partie du mécanisme permettant de contrôler l'incidence de la pale 4 en fonction de la position angulaire du rotor. La pale 4 tourne autour de l'axe 3. Selon ce premier mode de réalisation, un disque 12 forme un vilebrequin dont l'axe central est fixé sur un second bras opposé au premier bras 2. Le vilebrequin peut avoir différentes formes sans se limiter à un simple disque. Sur ce vilebrequin est fixée une bielle 13 reliée au palonnier 7 qui pivote autour de l'axe 8 solidaire de la nacelle 6. L'autre extrémité de ce palonnier est reliée à une tringle 14 elle-même reliée à un guignol 15 fixé à la pale. Lorsque le rotor tourne, ce n'est pas le vilebrequin qui tourne, mais la nacelle qui tournent relativement autour du vilebrequin qui lui est fixe puisque rattaché directement au bras opposé 2'.

Les figures 4A à 4D représentent le cycle de fonctionnement du mécanisme décrit aux figures 2 et 3 permettant de contrôler l'inclinaison de la pale en fonction de la position angulaire du rotor. Contrairement au mode de réalisation décrit à la figure 1, le rotor tourne cette fois dans le sens horaire et il s'agit dans le cas d'espèce d'une application éolienne. Comme dans la figure 1, le flux d'air vient de gauche. La pale dont la position la plus « au vent » ou « la plus proche du vent » selon la terminologie consacrée est en phase de montée, bord d'attaque orienté vers le haut, et la pale en position la plus « sous le vent » est en phase de descente, bord d'attaque orienté vers le bas. La figure 4A montre la pale en position haute. Dès que cette position est passée, selon le principe de la machine de Lipp, la pale doit être inclinée progressivement vers le bas afin de créer une force sollicitant le maintien en rotation du rotor. La figure 4B montre la pale dans cette phase du cycle, le rotor ayant tourné de 90° par rapport à sa position initiale de la figure 4A. Lorsque le rotor est à 180° de sa position initiale, la pale doit de nouveau être maintenue face au vent, comme le montre la figure 4C. Passés ces 180° de rotation, la pale est en phase de montée, bord d'attaque orienté vers le haut. La figure 4D montre la pale dans cette phase de montée, à 270° de la position initiale. On peut constater en observant successivement ces quatre figures que le vilebrequin constitué du disque 12 est resté dans la même position par rapport au bras 2. Lors d'un cycle de fonctionnement, l'axe 8 sur lequel pivote le palonnier 7 décrit un cercle centré sur l'axe 3, cercle représenté en pointillé sur les figures 4A à 4D. Cet axe, fixé sur la nacelle 6, est bien en mouvement par rapport au bras 2.

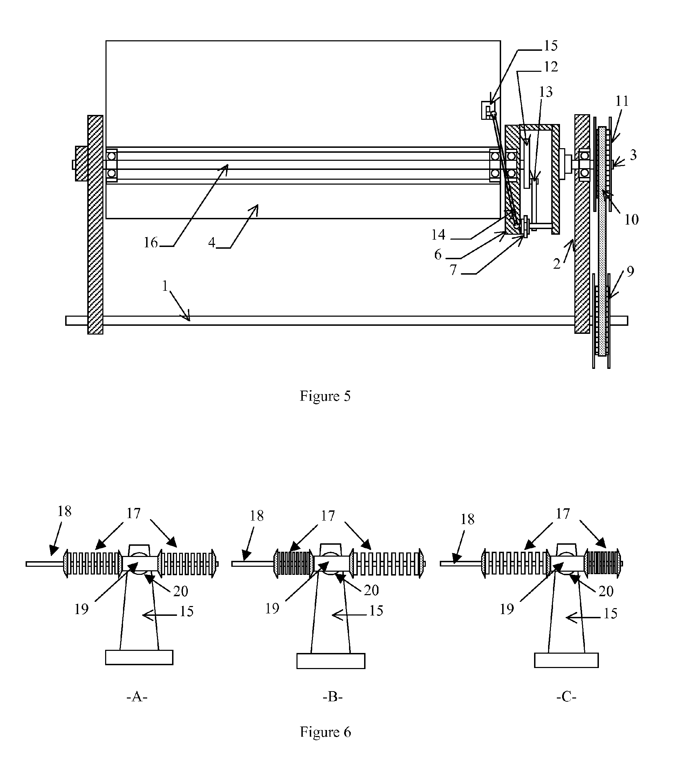

La figure 5 est une vue en coupe de l'ensemble du mécanisme permettant de contrôler l'inclinaison de la pale en fonction de la rotation du rotor. Dans ce mode de réalisation, la pale est fixée à chacune de ses extrémités. L'axe 16, monté dans le prolongement de l'axe 3, autour duquel tourne la pale 4, est fixé au bras 2' opposé au bras 2. A l'extrémité de l'axe 16 est fixé le disque 12 formant le vilebrequin, qui entraîne la bielle 13, elle-même connectée à l'élément de renvoi 7 pivotant autour de l'axe 8 fixé sur la nacelle 6. Sans la tringle 14, la pale 4 tournerait librement autour de l'axe 16.

Selon un mode de réalisation, la bielle n'est pas directement reliée au palonnier ; la tête de la bielle peut être attachée à une partie mobile en translation, par exemple sur un chariot monté sur un rail linéaire, cette partie mobile étant alors reliée au palonnier grâce à un nouvel élément de renvoi. Cette solution permet si nécessaire de compenser la dissymétrie du mouvement des pales observée sur un cycle de rotation complet du rotor, dissymétrie inhérente au principe mécanique de la bielle montée directement sur l'élément de renvoi 7. Cette dissymétrie peut également être compensée en jouant sur la géométrie des différents éléments : élément de renvoi 7, tringle 14 et guignol 15.

Les figures 6A à 6C présentent une variante de réalisation pour diminuer l'inclinaison maximale de la pale pour des vitesses de flux élevées. Le point d'accroche de la tringle 14 sur le guignol 15 est rendu variable grâce un système basé sur l'emploi d'un ou de plusieurs amortisseurs. On pourra prévoir un tarage des ressorts et une course de ou des amortisseurs tel que passé une certaines force exercée sur la pale, l'incidence de cette dernière par rapport au flux devienne négligeable voire nulle quelque soit la position du palonnier 7. L'hydraulique n'est pas à négliger car en plus de jouer un rôle dans la sauvegarde de l'intégrité de la machine, elle permet de modifier finement la position angulaire de la pale en fonction de la position du rotor et de limiter ou d'éviter les phénomènes oscillatoires.

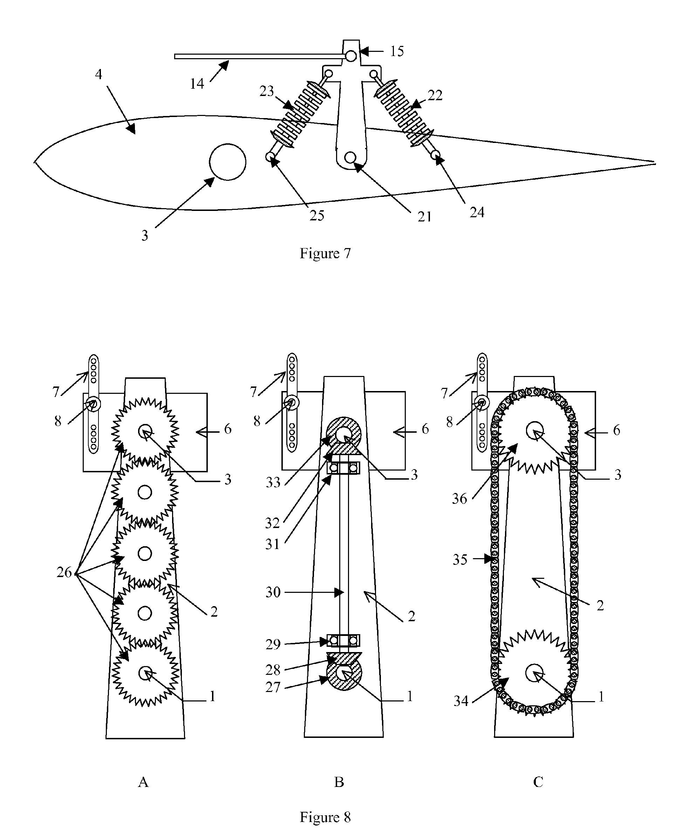

Selon un autre mode de réalisation, le contrôle des valeurs maximales de l'inclinaison des pales en fonction de la force du flux est réalisé en permettant au guignol de pivoter autour de l'axe 17 fixé sur la pale, comme le montre la figure 7. Des amortisseurs sont montés entre le guignol et la pale, de manière à permettre un auto-ajustement de l'inclinaison du guignol par rapport à la pale en fonction de la force qui lui est exercée. Lorsque l'amortisseur se comprime, l'incidence de la pale diminue.

Selon un autre mode de réalisation, on pourra gérer les valeurs limites des incidences des pales grâce à un actionneur permettant de modifier la course de la bielle 13 en faisant varier la distance entre le pied de la bielle et le centre du vilebrequin 12. Une came dont l'axe de rotation serait dans l'axe de rotation du vilebrequin peut venir appuyer sur le pied de bielle qui coulisse dans un rayon du vilebrequin. En actionnant cette came à partir d'un système d'asservissement mécanique, il est possible d'éloigner ou de rapprocher le pied de bielle de l'axe de rotation du vilebrequin, et ainsi modifier la course de la bielle. La partie du mécanisme qui coulisse dans le vilebrequin peut être maintenu par un ressort situé en périphérie du vilebrequin.

Selon d'autres modes de réalisation, l'asservissement de la position du pied de la bielle peut être assuré par des systèmes combinant des solutions électromécaniques, pneumatiques, hydrauliques, et électroniques.

L'ensemble poulies/courroie peut être suivant d'autres variantes de réalisation remplacé par une cascade de pignons (figure 8A), des renvois d'angle à 90° (figure 8B) ou encore une chaine et deux pignons (figure 8C). Selon d'autres variantes de réalisation encore, non représentées, des systèmes d'entrainement hydraulique, électrique ou pneumatique peuvent être utilisés.

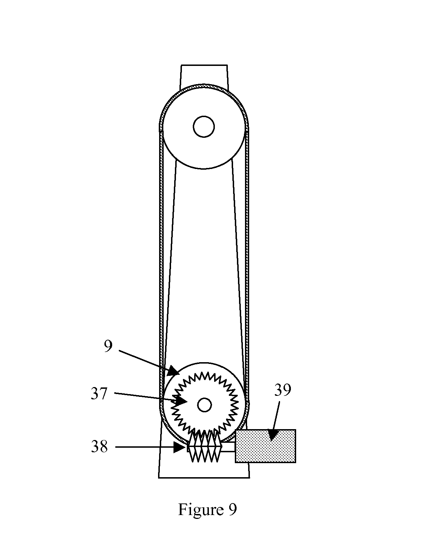

La figure 9 représente une solution pour modifier la position angulaire du pignon 9 grâce à un actionneur faisant appel à une vis sans fin. Ceci permet de décaler angulairement le cycle des pales par rapport à la position angulaire du rotor. Cette possibilité peut être intéressante, notamment lorsque l'invention est utilisée pour concevoir un générateur à axe vertical, ou encore lorsqu'elle sert pour réaliser un propulseur dont on veut contrôler l'orientation du flux.

Un des avantages essentiels de l'invention est son adaptabilité en fonction de la vitesse du flux, récupéré ou produit suivant que l'on est en mode générateur ou en mode propulseur. Pour maintenir un rendement élevé sur une large plage de vitesses de flux, il est possible de faire varier les angles d'incidence maximaux des pales en fonction de la vitesse du flux. Plus la vitesse du flux augmente, et plus les valeurs limites de l'incidence des pales doivent diminuer, pour devenir quasiment nulle dans les conditions extrêmes.

Dans le cas d'un système à chaîne, à renvois d'angles ou à cascade de pignons, on peut prévoir des carters remplis d'huile pour limiter au maximum l'usure de ces organes de transmission mécanique et améliorer autant que possible le rendement. Des chaines auto-lubrifiées peuvent également être utilisées sur des versions à bas coût.

Dans le cas d'un fonctionnement par chaines ou par courroies, un système de tension automatique est avantageusement réalisé, de façon connue en soi, pour limiter les opérations de maintenance.

Un entrainement par engrenage classique ou par renvoi d'angle présente l'avantage d'éviter le problème de tension des chaines ou des courroies, au détriment toutefois du rendement. Cependant, le système faisant appel aux renvois d'angle est avantageux pour la réalisation de rotors de grandes dimensions et pour minimiser les opérations de maintenance.

L'invention peut être déclinée en version horizontale ou en version verticale.

### a) Générateur en version horizontale

Dans la version horizontale, toute la structure doit pouvoir tourner autour d'un axe vertical de manière à maintenir le générateur en permanence face au flux du fluide. Une dérive peut être utilisée comme pour une girouette, mais sur des versions de plus grande échelle, un asservissement électromécanique de la position du générateur par rapport à la direction du flux est préféré.

Suivant un mode de réalisation, on peut générer une incidente différente entre les moments ou les pales sont au plus près du flux du fluide et les moments ou elles sont au plus loin du flux du fluide. On peut notamment faire en sorte que l'incidence soit plus prononcée pour les pales au plus loin du flux, donc partiellement masquées par les autres pales au plus près du flux.

Selon un mode de réalisation, en mode générateur à axe horizontal, on peut prévoir que les pales au plus près du flux du fluide soient en phase de montée et que les pales au plus loin du flux de fluide soient en phase de descente.

Selon un autre mode de réalisation, toujours en mode générateur à axe horizontal, on peut prévoir que les pales au plus près du flux du fluide soient en phase de descente et que les pales au plus loin du flux du fluide soient en phase de montée.

L'avantage principal de la version horizontale en générateur est sa simplicité.

### b) Générateur en version verticale

En mode générateur à axe vertical, deux solutions peuvent être retenues pour maintenir le système dans la bonne direction par rapport au flux du fluide.

La première solution est d'utilisée comme dans le cas horizontal un système de type girouette permettant de maintenir toute la structure dans la bonne direction par rapport à la direction du flux du fluide.

La deuxième solution, plus évoluée, est de commander en rotation via un actionneur 18 la poulie 9, comme l'illustre la figure 9. En effet, piloter cette poulie (ou ce pignon, ou cet engrenage, ou ce renvoi d'angle) permet de modifier la direction de l'angle d'attaque de ou des pale(s) par rapport à la direction du flux du fluide, et donc de s'affranchir de monter toute la structure sur girouette. Un asservissement de l'actionneur doit être fait en fonction de la direction du flux du fluide.

Dans le cas ou le principe de contrôle de la position du pignon central serait retenu pour réaliser un propulseur, il est ainsi possible d'orienter le flux sur 360°. Dans le cas d'un propulseur à axe horizontal, cette solution permet de réaliser une fonction de « trim » analogue à celles des propulseurs marins à hélice.

Selon différents modes de réalisation, le rotor peut être conçu pour tourner dans le sens horaire ou dans le sens antihoraire.

Selon un mode de réalisation, on préférera un nombre de pales impair, de manière à ce que le système soit naturellement instable, facilitant ainsi sa mise en rotation dans assistance dans le cas d'une déclinaison en générateur.

Selon différents modes de réalisation, le rotor peut compter jusqu'à plusieurs dizaines de pales, réparties uniformément sur toute la circonférence du rotor.

Selon différents modes de réalisation, plusieurs pales peuvent être montées sur un même bras du rotor. L'espace entre ces différentes pales doit être suffisant pour permettre la rotation de chaque pale sur son propre axe de rotation. Les pales montées sur un même bras peuvent être identiques ou de tailles et de formes différentes. Selon un mode de réalisation, les pales situées au plus près du centre du rotor pourront avoir une corde plus petite que les pales montées en extrémité du bras. Chaque pale peut avoir son propre mécanisme d'asservissement ou un seul mécanisme d'asservissement par bras peut être utilisé pour commander seul les différentes pales de ce même bras.

Selon différents modes de réalisation, les pales peuvent avoir un profil symétrique ou un profil asymétrique.

Selon un mode de réalisation, il est possible d'intégrer des volets sur les pales, volets qui permettent de modifier le bord d'attaque et/ou le bord de fuite des pales. Il est possible d'intégrer également des doubles volets, et de rendre le profil des pales déformable. L'utilisation d'un aérofrein sur la pale, commandé par électronique, est également envisageable, dans le but de ralentir la vitesse de rotation du rotor. Les différentes solutions retenues dans l'aviation pour retarder le décrochage de la couche limite peuvent être utilisées, comme l'emploi de peau de requin en nano-matériaux.

Selon un mode de réalisation, la pale peut n'être maintenue que par une seule de ses extrémités. L'architecture du mécanisme sera modifiée en conséquence, puisque l'axe du vilebrequin doit passer à l'intérieur de l'axe faisant la liaison entre la nacelle et la poulie dans le cas d'un système à courroie.

Selon différents modes de réalisation, le profil de la pale peut varier dans le sens de la longueur de la pale. Plus particulièrement, on peut réaliser des pales dont la corde serait plus grande à une extrémité qu'à l'autre. Dans le cas ou l'invention serait retenue pour réaliser une éolienne en mode vertical avec des pales tenues que par une seule extrémité, on peut réaliser des pales plus larges côté bras, de manière à mieux répartir les efforts sur l'ensemble de la structure.

Selon un mode de réalisation, l'axe de rotation de la pale 4 peut être situé au premier tiers de la pale en partant du bord d'attaque.

Selon un autre mode de réalisation, le contrôle angulaire des pales est fait par l'intermédiaire de guignols pouvant être situés à n'importe quel endroit sur les pales.

Si l'invention en version générateur est confrontée à des conditions de vitesse de flux limites, on peut selon un mode de réalisation concevoir les tringles 14, visibles sur la figure 3, de manière à ce qu'elles puissent servir de fusible en se rompant au delà d'une certaine contrainte mécanique.

Selon un autre mode de réalisation encore, le vilebrequin peut être remplacé par une ou plusieurs cames, came(s) agissant sur un ou plusieurs poussoirs, ces derniers actionnant des pompes hydrauliques ou pneumatiques fixées sur la nacelle. Ces pompes permettent d'actionner des vérins, hydraulique ou pneumatique selon le cas, ces vérins étant reliés à la pale par une de leurs extrémités et à la nacelle par leur autre extrémité. En actionnant ces vérins, il est ainsi possible de faire pivoter la pale autour de l'axe fixe de la nacelle.

Dans le mode générateur, un système de frein peut être réalisé pour stopper le rotor en cas d'urgence, et pour faciliter les opérations de maintenance.

Selon un mode de réalisation, chacune des parties constituantes peut être équilibrée afin de faciliter la mise en rotation de la structure tout en diminuant les vibrations. Par exemple les nacelles, les ailes par rapport à leur axe de rotation, et plus généralement tout l'équipage mobile peuvent faire l'objet d'un équilibrage pour faciliter cette mise en rotation tout en améliorant la fiabilité de la machine.

En mode générateur, une machine électrique telle qu'un alternateur est mise en mouvement directement par le rotor ou via une transmission multiplicatrice ou réductrice.

Selon une variante, l'alternateur peut être remplacé par tout type de générateur électrique, comme les moteurs à aimants permanents. Le rotor peut également entrainer toutes sortes de pompes, hydrauliques ou pneumatiques.

Suivant d'autres modes de réalisation, les alternateurs peuvent être placés directement en bout des pales.

Idéalement, toutes les parties en mouvement sont montées sur roulement à billes ou sur paliers afin de limiter au maximum les pertes par frottements mécaniques tout en réduisant l'usure de la machine. Un système de lubrification faisant appel à une pompe à huile peut être utilisé pour lubrifier les parties mécaniques en fonction des besoins.

On va maintenant décrire une autre forme de réalisation de la machine, notamment pour un fonctionnement selon une cinématique de type Voith-Schneider, et également en vue de la réalisation d'une machine bi-mode où le rotor peut être sélectivement mis dans un mode de fonctionnement ou un autre, par exemple dans un mode de fonctionnement de type Lipp ou un mode de fonctionnement de type Voith-Schneider.

A ce propos, on connaît depuis longtemps le principe du rotor de type Voith-Schneider, ce rotor étant utilisé en mode propulseur marin dans certaines applications (bateaux fluviaux, remorqueurs, ferries, etc...). Généralement, la cinématique du rotor de Voith-Schneider est obtenue en utilisant un excentrique placé au centre du rotor, excentrique qui contrôle l'incidence des pales par le biais de bielles de grande taille. Les éléments mécaniques sont d'assez grande taille, ce qui complique les vitesses de rotations élevées.

Par ailleurs, en mode propulseur, un rotor à cinématique de type Voith-Schneider permet de très forts couples mais n'autorise pas des vitesses élevées, alors qu'un rotor à cinématique de type Lipp permet des vitesses élevées. Un propulseur capable de passer d'une cinématique à une autre peut donc présenter des avantages d'utilisation importants.

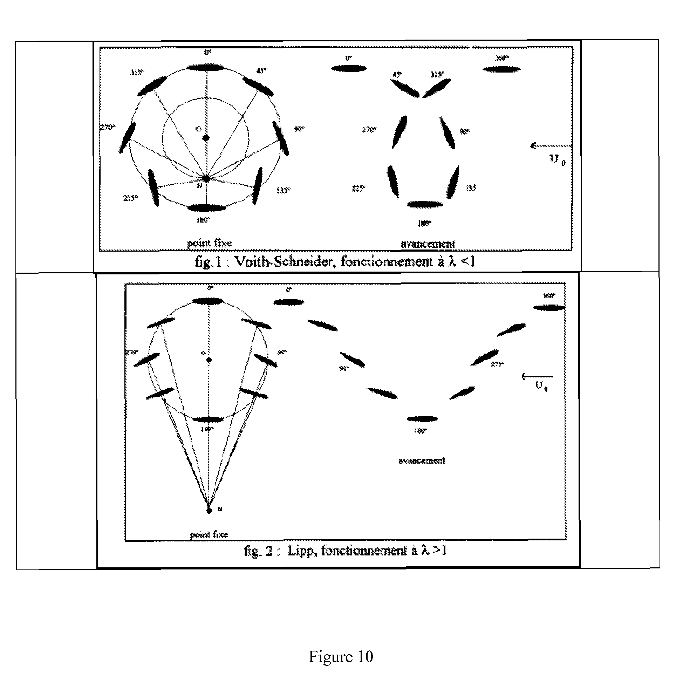

Tout d'abord, la figure 10 illustre graphiquement les différences entre la cinématique de type Voith-Schneider et la cinématique de type Lipp (extrait de « Etude des Performances d'un Propulseur Cycloïdal Nouveau (Procédé Lipp) », J.F. Devillers, T. Pichon, R. Roucous, 5emes journées de l'hydrodynamique, 22, 23, 24 mars 1995, Rouen).

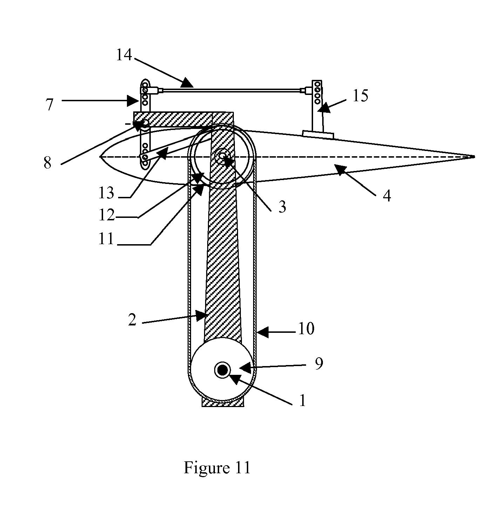

En référence maintenant à la figure 11, on va décrire une machine opérant selon une cinématique de type Voith-Scheider, fondée sur la même architecture générale que celle des figures précédentes. Des éléments ou parties identiques ou similaires à ceux des figures précédentes y sont désignés par les mêmes signes de référence et ne seront pas décrits à nouveau.

Pour réaliser la cinématique type Voith-Schneider, l'axe 8 autour duquel l'élément de renvoi 7 pivote est ici fixe par rapport au bras 2. En outre, le vilebrequin 12 qui actionne la bielle 13 est ici entraîné par la poulie 11 reliée à la poulie 9 par l'intermédiaire de la courroie 10 (ou chaîne, etc.). Comme dans le mode de fonctionnement de type Lipp, la poulie 9 est fixe.

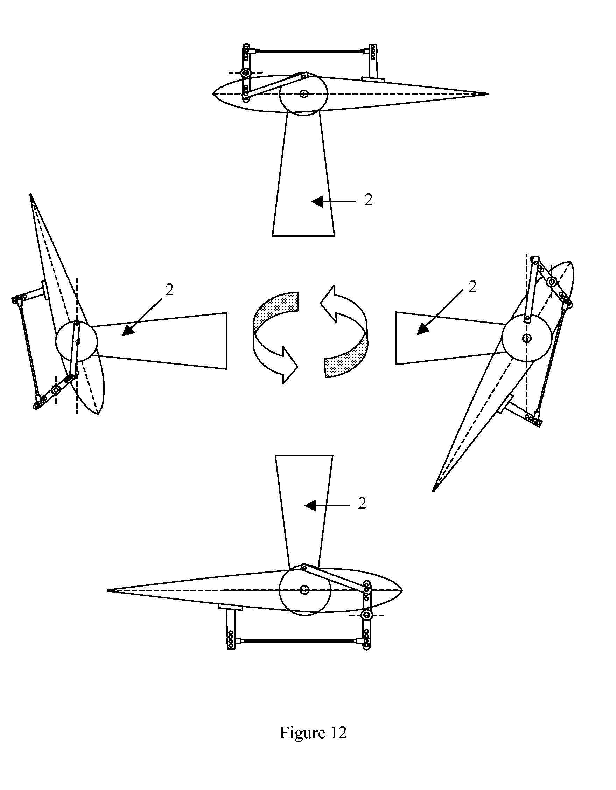

La figure 12 illustre le fonctionnement de cette machine pour 4 angles du rotor. On voit que le fait que l'axe 8 est fixe et que le vilebrequin est entraîné par la poulie 11 permet, par le même mécanisme d'embiellage, d'obtenir une cinématique différente, qui est maintenant du type Voith-Schneider.

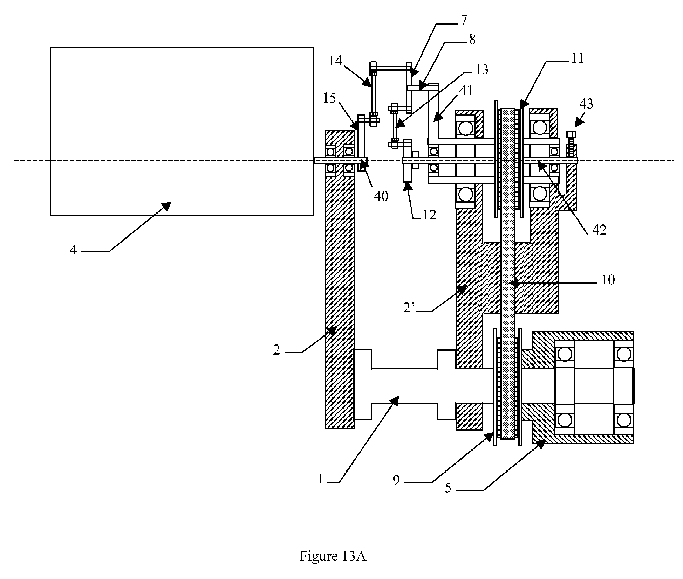

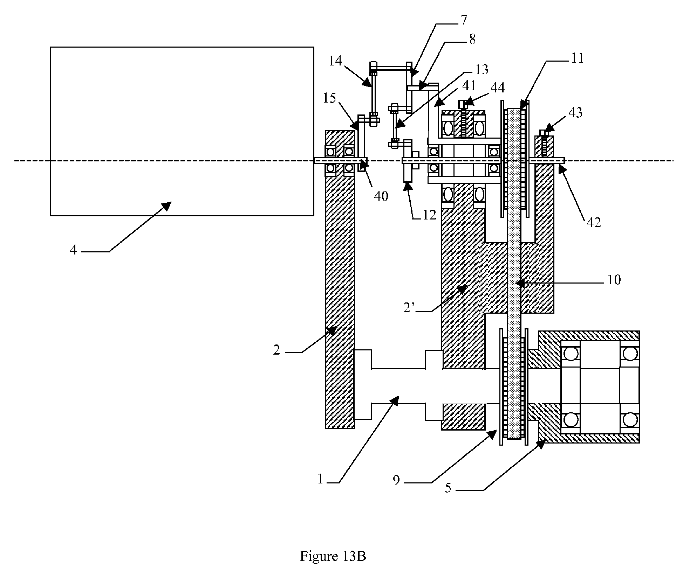

Les figures 13A et 13B illustre d'autre formes de réalisation de l'invention, avec des pales en porte-à-faux, non retenues à leur extrémité libre, l'ensemble des fonctions de support mécanique, d'entraînement et de commande étant reportés du côté de l'extrémité des pales opposée à leur extrémité libre.

La figure 13A illustre le cas d'une machine opérant selon une cinématique de type Lipp. La pale 4 est actionnée par un axe 40 traversant un palier ou roulement et sur lequel est fixé le guignol 15. Un autre axe 42 passe à l'intérieur d'une pièce 41 qui forme un élément d'excentrement, équivalent fonctionnel de la nacelle 6 des formes de réalisation précédentes. L'axe 42 est monté sur paliers ou roulements pour tourner par rapport à la pièce 41. La poulie 11 entraîne sélectivement la pièce 41 qui porte de façon déportée l'axe 8 autour duquel pivote l'élément de renvoi 7. L'axe 42 porte le vilebrequin 12 et est sélectivement bloqué en rotation par rapport à une partie 2' du bras 2. La pièce 41 est montée via des paliers ou roulements sur la partie de bras 2', pour tourner par rapport à ladite partie.

Dans l'exemple illustré sur la figure 13A, le blocage sélectif en rotation de l'axe 42 par rapport au bras 2 est illustré comme étant réalisé par une vis de blocage 43 par souci de clarté et de simplification. Dans le même esprit, sur la figure 13B, un blocage sélectif en rotation de la pièce 41 par rapport au bras 2 est illustré comme étant réalisé par une autre vis de blocage 4, par souci de clarté et de simplification.

Dans le cas de la figure 13A (cinématique type Lipp), la poulie 11 entraîne la pièce 41, tandis que l'axe 42 est bloqué par la vis 43.

Pour passer du mode de Lipp au mode de Voith-Schneider, la vis 44 (figure 13B) est serrée et la poulie 11 entraîne l'axe 42 tandis que la pièce 41 est bloquée contre la rotation.

On comprend ainsi qu'on peut passer, par des moyens de commande mécanique simple (la schématisation par des vis de blocage étant effectuée ici par souci de clarté et de compréhension) d'une cinématique type Lipp à une cinématique type Voith-Schneider. Cette possibilité est très intéressante, notamment en mode propulseur : en effet si le mode de Voith-Schneider offre un très bon rendement aux faibles vitesses d'avancement (définie comme la vitesse de l'engin propulsé par le rotor sur la vitesse des pales dans leur rotation), au contraire le mode de Lipp offre un très bon rendement aux hautes vitesses d'avancement. Il est donc possible avec un même rotor de combiner un très fort couple aux faibles vitesses et de permettre également des vitesses très élevées.

En résumé, la solution pour passer d'une cinématique à l'autre consiste à entraîner par l'intermédiaire de la poulie 11 soit un premier axe tandis que le deuxième est bloqué dans une position, et vice et versa. Dans une forme de réalisation industrielle, ce type de mécanisme peut se fonder par exemple sur des crabots et des axes cannelés comme dans le cas des boîtes de vitesses, sur des systèmes d'embrayage mécaniques ou électromécaniques, sur des coupleurs électro-magnétiques, etc.

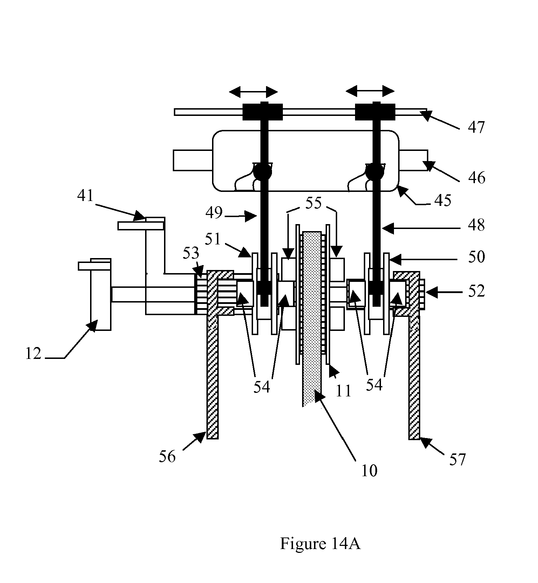

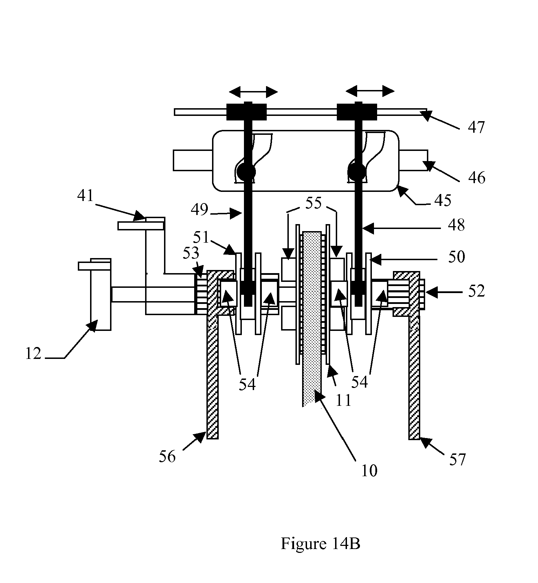

On va décrire maintenant en référence aux figures 14A et 14B un exemple d'un tel mécanisme de changement de mode. Ce mécanisme comprend un barillet 45 qui pivote autour d'un axe 46 en se bloquant dans l'une parmi deux positions. L'actionneur permettant cette action n'est pas représenté mais elle reprend le principe usuel des boites de vitesse séquentielle utilisée dans les motocyclettes. Le sélecteur de position peut être commandé mécaniquement (ou non) depuis une commande centrale. Le barillet 45 comprend deux chemins permettant de déplacer deux fourchettes 48 et 49 le long d'un axe 47. Les fourchettes 48 et 49 pilotent respectivement des pièces 50 et 51. Ces dernières, munies de cannelures en leur centre, sont prévues pour pouvoir se déplacer respectivement le long de deux axes cannelés 52 et 53, avec lesquels elles sont en prise. Les pièces 50 et 51 sont également pourvues sur chaque côté de crabots 54. Selon la position des pièces 50 et 51, ces crabots viennent sélectivement en prise avec des crabots homologues 55 portés par la poulie 11 entraînée par la courroie 10, ou par d'autres crabots constitués par des pièces 56 et 57, pièces qui sont maintenues fixes par rapport au bras 2, qui porte ce le mécanisme représenté sur ces figures. Le vilebrequin 12 est solidaire de l'axe cannelé 52 tandis que l'élément d'excentrement 41 est solidaire de l'axe cannelé 53. Dans la position illustrée sur la figure 14A, le barillet 45, et donc les fourchettes 48 et 49 ainsi que les pièces 50 et 51, sont dans des positions telles que le vilebrequin 12 est maintenu fixe dans une position donnée, car bloqué en rotation par la pièce 57, tandis que l'élément d'excentrement 41 est accouplée au pignon 11. On retrouve ainsi le fonctionnement en cinématique de type Lipp.

Dans le cas de la figure 14B, le barillet 45 a été déplacé vers sa deuxième position de sorte que le barillet 45, les fourchettes 48 et 49 et les pièces 50 et 51 sont dans des positions telles que l'élément d'excentrement 41 est maintenu fixe dans une position donnée, car bloqué en rotation par la pièce 56, tandis que le vilebrequin 12 est accouplé au pignon 11. On retrouve ainsi le fonctionnement en cinématique de type Voith-Schneider.

Bien entendu, la présente invention n'est nullement limitée aux formes de réalisation décrites et représentées, mais l'homme du métier saura y apporter de nombreuses variantes et modifications.

## Revendications

1. Machine tournante à rotor fluidique, le rotor comprenant au moins une pale (4) montée sur un bras (2) tournant autour d'un axe principal (1) du rotor, le rotor étant maintenu par une structure porteuse (5) dans une orientation telle que ledit axe (1) soit essentiellement perpendiculaire à la direction du flux du fluide, la pale (4) étant montée pivotante autour d'un axe de rotation (3) parallèle à l'axe principal (1), la machine comprenant des moyens pour générer un mouvement de rotation relatif de la pale (4) par rapport au bras (2) au niveau de l'axe de rotation (3), pour ainsi faire varier l'inclinaison de la pale,
machine **caractérisée en ce que** lesdits moyens comprennent un mécanisme à excentrique (6 ; 41 ; 12, 7 ; 8) tournant sur ledit axe de rotation (3) de la pale et dont la position angulaire est commandée à partir de la rotation du rotor.

2. Machine selon la revendication 1, caractérisée en ce le mécanisme à excentrique comprend un élément de renvoi (7) tournant autour d'un axe de rotation (8) non confondu avec l'axe de rotation (3), une des extrémités dudit élément de renvoi étant reliée à la pale (4) l'autre extrémité étant reliée à un vilebrequin (12).

3. Machine selon la revendication 2, **caractérisée en ce que** le vilebrequin (12) est monté sur un arbre définissant l'axe de rotation (3) et monté sur le bras (2).

4. Machine selon l'une des revendications 2 et 3, **caractérisée en ce que** le mécanisme comprend un élément d'excentrement (6 ; 41) monté sur l'axe de rotation (3) et portant l'axe de rotation (8), et des moyens pour synchroniser le mouvement de rotation dudit élément (6) avec la rotation du rotor autour de l'axe principal (1).

5. Machine selon la revendication 4, **caractérisée en ce que** les moyens de synchronisation sont aptes à conserver à l'élément d'excentrement (6 ; 41) la même orientation quelle que soit la position angulaire du rotor, le vilebrequin (12) étant fixe par rapport au bras (2), pour ainsi réaliser une cinématique de type Lipp.

6. Machine selon la revendication 4, **caractérisée en ce que** les moyens de synchronisation sont aptes à faire tourner l'élément d'excentrement (6 ; 41) avec le bras (2), le vilebrequin (12) conservant la même orientation quelle que soit la position angulaire du rotor (2), pour ainsi réaliser une cinématique de type Voith-Schneider.

7. Machine selon l'une des revendications précédentes, **caractérisé en ce qu'**elle comprend des moyens pour faire varier l'angle d'incidence maximal de la ou des pales en fonction de la vitesse du flux du fluide.

8. Machine selon la revendication 7, caractérisée en que lesdits moyens comprennent des éléments d'auto-modification de la géométrie de la commande entre le mécanisme à excentrique et la pale.

9. Machine selon la revendication 7, caractérisée en que lesdits moyens comprennent des éléments de réglage de la géométrie de la commande entre le mécanisme à excentrique et la pale.

10. Machine selon l'une des revendications 5 et 6, **caractérisée en ce que** le maintien de l'orientation de l'élément d'excentrement (6 ; 41), respectivement du vilebrequin (12), est assuré par une transmission angulaire à coefficient unitaire entre un élément (9) tournant avec le bras et un élément (11) tournant avec l'élément d'excentrement (6 ; 41), respectivement avec le vilebrequin (12).

11. Machine selon les revendications 5 et 6 en combinaison avec la revendication 9, **caractérisée en ce qu'**elle comprend des moyens de commutation de mode pour sélectivement mettre en prise l'élément (11) soit avec l'élément d'excentrement, soit avec le vilebrequin et pour libérer respectivement le vilebrequin (12) ou l'élément d'excentrement (6 ; 41).

## Patentansprüche

1. Rotierende Maschine mit Fluidrotor, wobei der Rotor mindestens ein Blatt (4) aufweist, das an einem Arm (2) angebracht ist, der um eine Hauptachse (1) des Rotors rotiert, wobei der Rotor von einer Tragstruktur (5) in einer Richtung gehalten wird, derart, dass die genannte Achse (1) im Wesentlichen zur Richtung der Fluidströmung im rechten Winkel steht, wobei das Blatt (4) um eine zur Hauptachse (1) parallelen Drehachse (3) kippbar angebracht ist, wobei die Maschine Mittel umfasst, um eine Drehbewegung des Blattes (4) relativ zum Arm (2) um die Drehachse (3) zu veranlassen und so die Neigung des Blattes zu ändern,
Maschine, **dadurch gekennzeichnet, dass** die genannten Mittel einen Exzentermechanismus (6; 41; 12, 7; 8) umfassen, der sich um die genannte Drehachse (3) des Blattes dreht und dessen Winkelstellung in Abhängigkeit von der Rotation des Motors gesteuert wird.

2. Maschine nach Patentanspruch 1, **dadurch gekennzeichnet, dass** der Exzentermechanismus ein Rückstellteil (7) umfasst, das sich um eine Drehachse (8) dreht, die nicht mit der Drehachse (3) identisch ist, wobei das eine der Enden des genannten Rückstellteils mit dem Blatt (4) verbunden ist und das andere Ende mit einer Kurbel (12).

3. Maschine nach Patentanspruch 2, **dadurch gekennzeichnet, dass** die Kurbel (12) auf einer Welle angebracht ist, die die Drehachse (3) definiert und am Arm (2) angebracht ist.

4. Maschine nach einem der Patentansprüche 2 und 3, **dadurch gekennzeichnet, dass** der Mechanismus ein Exzenterteil (6; 41) umfasst, das auf der Drehachse (3) angebracht ist und die Drehachse (8) trägt, und Mittel zur Synchronisation der Drehbewegung des genannten Teils (6) mit der Rotation des Rotors um die Hauptachse (1).

5. Maschine nach Patentanspruch 4, **dadurch gekennzeichnet, dass** die Synchronisationsmittel in der Lage sind, unabhängig von der Winkelstellung des Rotors dieselbe Richtung des Exzenterteils (6; 41) zu erhalten, wobei die Kurbel (12) relativ zum Arm (2) fest steht, um damit eine Kinematik vom Lipp-Typ zu realisieren.

6. Maschine nach Patentanspruch 4, **dadurch gekennzeichnet, dass** die Synchronisationsmittel in der Lage sind, das Exzenterteil (6; 41) mit dem Arm (2) rotieren zu lassen und dabei unabhängig von der Winkelstellung des Rotors (2) dieselbe Richtung der Kurbel (12) zu erhalten, um damit eine Kinematik vom Voith-Schneider-Typ zu realisieren.

7. Maschine nach einem der vorangehenden Patentansprüche, **dadurch gekennzeichnet, dass** sie Mittel umfasst, um den maximalen Anstellwinkel des Blattes oder der Blätter in Abhängigkeit von der Strömungsgeschwindigkeit des Fluids zu ändern.

8. Maschine nach Patentanspruch 7, **dadurch gekennzeichnet, dass** die genannten Mittel Teile zur automatischen Änderung der Steuergeometrie zwischen dem Exzentermechanismus und dem Blatt umfassen.

9. Maschine nach Patentanspruch 7, **dadurch gekennzeichnet, dass** die genannten Mittel Teile zur Einstellung der Steuergeometrie zwischen dem Exzentermechanismus und dem Blatt umfassen.

10. Maschine nach einem der Patentansprüche 5 und 6, **dadurch gekennzeichnet, dass** die Beibehaltung der Richtung des Exzenterteils (6; 41) bzw. der Kurbel (12) durch ein Winkelgetriebe mit Übersetzungsverhältnis Eins zwischen einem rotierenden Teil (9) am Arm und einem rotierenden Teil (11) am Exzenterteil (6; 41) bzw. an der Kurbel (12) sichergestellt wird.

11. Maschine nach den Patentansprüchen 5 und 6 in Kombination mit Patentanspruch 9, **dadurch gekennzeichnet, dass** sie Mittel zur Umschaltung der Betriebsart umfasst, um wahlweise das Teil (11) entweder mit dem Exzenterteil, oder mit der Kurbel in Eingriff zu bringen und um die Kurbel (12) bzw. das Exzenterteil (6; 41) freizusetzen.

## Claims

1. A fluidic rotor rotary machine, the rotor comprising at least one blade (4) mounted on an arm (2) rotating about a main axis (1) of the rotor, the rotor being held by a support structure (5) in an orientation such that said axis (1) is essentially perpendicular to the fluid flow direction, the blade (4) being pivotally mounted about a rotational axis (3) parallel to the main axis (1), the machine comprising means for a relative rotational movement of the blade (4) relative to the arm (2) at the rotational axis (3), thereby varying the blade angle,
the machine being **characterized in that** said means comprise an eccentric mechanism (6; 41; 12, 7; 8) rotating on said blade rotational axis (3), the position of which is controlled by the rotor revolution.

2. A machine according to claim 1, **characterized in that** the eccentric mechanism comprises a transfer member (7) rotating about a rotational axis (8) shifted relative to the rotational axis (3), one end of said transfer member being connected to the blade (4) and the other end being connected to a crankshaft (12).

3. A machine according to claim 2, **characterized in that** the crankshaft (12) is mounted on a shaft defining the rotational axis (3) and mounted on the arm (2).

4. A machine according to one of claims 2 and 3, **characterized in that** the mechanism comprises an eccentric member (6; 41) mounted on the rotational axis (3) and carrying the rotational axis (8), and means for synchronizing the rotational movement of said member (6) with the revolution of the rotor about the main axis (1).

5. A machine according to claim 4, **characterized in that** the synchronizing means are adapted to keep the eccentric member (6; 41) in the same orientation irrespective of the angular position of the rotor, the crankshaft (12) being fixed relative to the arm (2), to thereby provide a Lipp-type kinematics.

6. A machine according to claim 4, **characterized in that** the synchronizing means are adapted to rotate the eccentric member (6; 41) with the arm (2), the crankshaft (12) retaining the same orientation irrespective the angular position of the rotor (2), thereby achieving a Voith-Schneider-type kinematics.

7. A machine according to any one of the preceding claims, **characterized in that** it comprises means for varying the maximum pitch angle of the blade(s) as a function of the fluid flow velocity.

8. A machine according to claim 7, **characterized in that** said means comprise members for the self-modification of the geometry of the control between the eccentric mechanism and the blade.

9. A machine according to claim 7, **characterized in that** said means comprise members for adjusting the control geometry between the eccentric mechanism and the blade.

10. A machine according to one of claims 5 and 6, **characterized in that** the constant orientation of the eccentric member (6; 41), respectively of the crankshaft (12), is obtained by a one-to-one ratio angular transmission between a member (9) rotating with the arm and a member (11) rotating with the eccentric element (6; 41), respectively with the crankshaft (12).

11. A machine according to claims 5 and 6 in combination with claim 9, **characterized in that** it comprises mode switching means for selectively engaging the member (11) either with the eccentric member, or with the crankshaft, and for releasing the crankshaft (12) or the eccentric element (6; 41), respectively.
